Europäisches Patentamt

European Patent Office

Office européen des brevets

(11) Veröffentlichungsnummer: **0 517 040 A1**

## (12) EUROPÄISCHE PATENTANMELDUNG

(21) Anmeldenummer: **92108567.6**

(22) Anmeldetag: **21.05.92**

(51) Int. Cl.5: **B23K 11/11, H01R 4/02**

(30) Priorität: **30.05.91 DE 4117696**

(43) Veröffentlichungstag der Anmeldung:
**09.12.92 Patentblatt 92/50**

(84) Benannte Vertragsstaaten:
**AT BE CH DE ES FR GB IT LI NL PT SE**

(71) Anmelder: **MASCHINEN- UND APPARATEVERTRIEB HELMUT STRUNK**
**Siegtalstrasse 13**
**W-5242 Kirchen-Freusburg(DE)**

(72) Erfinder: **Münch, Hans-Hermann**
**Kappellenweg**
**W-5222 Morsbach/Rhein(DE)**

(74) Vertreter: **Grosse, Dietrich, Dipl.-Ing. et al**
**Patentanwälte**
**HEMMERICH-MÜLLER-GROSSE-POLLMEIER--**
**VALENTIN-GHISKE Hammerstrasse 2**
**W-5900 Siegen 1(DE)**

(54) **Vorrichtung zum Verschweissen der Adern von Litzen, insbesondere Kupferlitzen.**

(57) Die Erfindung betrifft eine Vorrichtung zum Verschweißen der Adern von Litzen zu einem festen und gasdichten Anschlußknoten, die aus Keramikplatten ausgeführte, gegeneinander verschiebbare Flanken eines Verdichtungsraumes aufweist, der horizontal durch Elektroden begrenzt ist, wobei die Unterelektrode mit einer der Backen fest verbunden und mit dieser verschiebbar ist, während ein absenkbarer Elektrodenhalter in einem Drehkörper Oberelektroden unterschiedlicher Breite aufweist, die in Verbindung mit einer Verstellung eines Anschlages wahlweise in Wirkstellung bringbar sind.

Fig. 1

EP 0 517 040 A1

Die Erfindung betrifft eine Vorrichtung zum Verschweißen der Adern einer oder mehrerer, insbesondere aus Kupferadern bestehender Litzen zu einem festen und gasdichten Anschlußknoten mit einem Verdichtungsraum für eingelegte Litzenabschnitte, dessen Flanken gegeneinander verschiebbar sind, und dessen Deckfläche zur Durchführung einer Widerstandsverschweißung absenkbar ist.

Beim Einsatz flexibler Sitzen für Verkabelungen, insbesondere auch bei der Zusammenfassung von Litzen zu Kabelbäumen, hat es sich bewährt, die für den Anschluß vorgesehenen Litzenenden, gegebenenfalls auch Mittelabschnitte von Litzen, nicht nur abzuisolieren, sondern auch zur Verbesserung der Anschlußmöglichkeiten diese zu einem mechanisch festen Anschlußknoten miteinander zu verbinden. Bewährt hat es sich auch, die Verbindung so durchzuführen, daß der Anschlußknoten sich als gasdicht erweist und seiner Umgebung nur seine äußeren Flächen bietet, so daß Oxidationsvorgängen wesentliche Ansatzflächen entzogen sind.

Ursprünglich wurden solche Litzenenden verzinnt und durch Weichlot miteinander verbunden. Ein solches Verzinnen ist umständlich, und die beim Einsatz von Loten verwendeten Flußmittel bieten oft Ansatzpunkte für Oxidationsvorgänge.

Beim Verschweißen der Drahtenden hat es sich gezeigt, daß die üblichen Werkzeuge nur für eine bestimmte Breite des entstehenden Anschlußknotens ausgelegt sind, die wünschenswerte Breite jedoch schwankt entsprechend dem Querschnitt der miteinander zu verbindenden Adern der Litzen, wobei einerseits unterschiedliche Kupferquerschnitte der Litzen selbst zu berücksichtigen sind und weiterhin in Betracht zu ziehen ist, daß bei bestimmten Anschlußpunkten die Adern mehrerer Litzen gemeinsam zu erfassen sind. Bei der Aufstellung üblicher Schweißgeräte für die Herstellung von Kabelbäumen wurde es daher oft erforderlich, mehrere Schweißvorrichtungen parallel vorzusehen und jeweils die dem gerade vorliegenden Querschnitt entsprechende Schweißmaschine zu benutzen.

Wesentlich anders gestaltet sich dieses auch nicht bei einer Vorrichtung nach der DE-PS 37 19 083. Die Schweißung wird bei dieser Vorrichtung als Ultraschallschweißung durchgeführt, und das betreffende Werkzeug ist so ausgebildet, daß zunächst durch seitliches Zusammenschieben die übliche Verdichtung als Zusammenfassung der einzelnen Adern der Litze bzw. der Litzen erfolgt, während beim nachfolgenden Verschweißen der Adern unter Ultraschalleinwirkung zusätzlich sowohl die Weite als auch die Höhe des entstehenden Anschlußknotens verringert werden. Bei bevorzugten Ausführungsbeispielen sollen die Einengungsbewegungen mechanisch von einer Anstellvorrichtung abgeleitet werden, so daß auch hier nur im wesentlichen ein Querschnitt zur Verfügung steht.

Die Erfindung geht von der Aufgabe aus, eine relativ einfach aufgebaute Schweißvorrichtung zum Verschweißen der Adern von Litzen zu schaffen, die in an sich bekannter Weise das Einlegen der Adern der Litze bzw. der Litzen durch Erweitern der Weite des Werkzeuges erlaubt, und bei der die Weite des für den Schweißvorgang zur Verfügung stehenden Raumes durch Verengen leicht einstellbar und damit den jeweils miteinander zu verbindenden Leitungsquerschnitten leicht anpaßbar ist.

Gelöst wird diese Aufgabe durch die Merkmale des Patentanspruches 1. Die Flanken des die Litzenenden fassenden Werkzeuges werden hierbei aus einer Ausgangsposition, welche das Einlegen der Adern durch ihre Weite erleichtert, für jeden Schweißvorgang auf eine Arbeitsweite zusammengeschoben, die sich durch entsprechendes Einstellen eines Anschlages leicht den jeweiligen Gegebenheiten anpassen läßt. Der Aufbau des Werkzeuges ist darüber hinaus so vorgenommen, daß zur Durchführung einer Widerstandsschweißung eine Unterelektrode zur Verfügung steht, welche sowohl während des Einlegens als auch während der eigentlichen Schweißung bei unterschiedlichen Breiten des umgrenzten Raumes diesen nach unten abschließt, während die benutzte Oberelektrode im Bereiche der üblichen Schweißungen ebenfalls die Weite des zum Schweißen benutzten Raumes übersteigt und auch bei schmalsten Schweißräumen nicht auszutauschen ist. Damit lassen sich mit dem gleichen Werkzeug je nach Einstellung des Anschlages beliebige gewünschte Breiten des gebildeten Anschlußknotens anfahren, ohne daß es des Wechsels irgendwelcher Werkzeugteile bedarf.

Zweckmäßige und vorteilhafte Weiterbildungen der Erfindung sind den Unteransprüchen zu entnehmen.

Im einzelnen erläutert wird die Erfindung anhand der Beschreibung von Ausführungsbeispielen in Verbindung mit diese darstellenden Zeichnungen. Es zeigen hierbei:

Figur 1      in schematischer Ansicht eine Vorrichtung zum Widerstandsverschweißen der Adern von Anschlußenden von Kupferlitzen,

Figur 2      schematisch eine Seitenansicht mit einer alternativen Ausführung der Einstellung eines Anschlages, und

Figur 3      ein weiteres Ausführungsbeispiel der Erfindung.

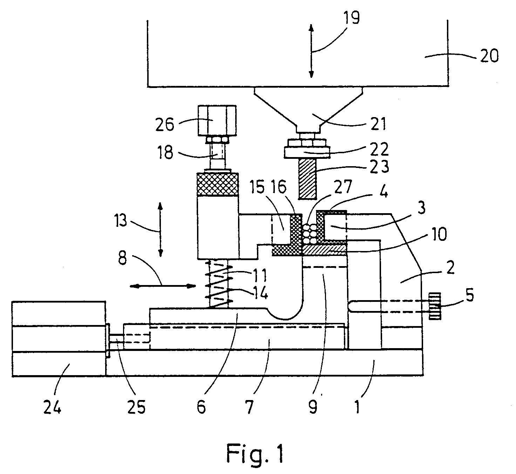

In Fig. 1 ist eine Vorrichtung zum Verschweißen der Adern von Kupferlitzen gezeigt, deren Grundplatte 1 mit einem Bock 2 verbunden ist, der in einen Backen 3 ausläuft, der vermittels von Keramikplatten 4 isolierend und schleißarm umkleidet ist. In einem Gewinde des Bockes 2 ist eine Stellschraube 5 vorgesehen, deren freies Ende als Anschlag für einen beweglichen Schlitten 6 dient, der in einer mit der Grundplatte 1 verbundenen Linearführung 7 in Pfeilrichtung 8 verschiebbar gehalten ist. Dieser Schlitten trägt mit einer Elektrodenaufnahme 9 eine zweckmäßig aus Wolfram bestehende Unterelektrode 10. Auf Führungsbolzen 11 ist ein Gleitstück 12 gehalten, das in Pfeilrichtung 13 vertikal verschiebbar ist und mittels einer Druckfeder 14 nach oben gegen einen durch das Ende der Führungsbolzen gegebenen Anschlag verspannt ist. Ein seitlich auskragender Backen 15 ist mit Keramikplatten 16 umkleidet, und über eine Isolierplatte 17 ist elektrisch isoliert mit dem Gleitstück 12 ein Schubstempel 18 verbunden.

Über der Anordnung ist in Pfeilrichtung 19 absenkbar und wieder anhebbar ein Elektrodenhalter 20 vorgesehen, der in einer Elektrodenaufnahme 21, festgehalten mittels eines Spannringes 22, eine Oberelektrode 23 aufweist, die ebenfalls aus einem Hartmetall, bspw. Wolfram, erstellt ist.

Mit der Grundplatte 1 ist weiterhin ein Druckmittelzylinder 24, zweckmäßig ein Pneumatikzylinder, verbunden, dessen Kolbenstange 25 an den Schlitten 6 angreift.

Der Backen 3 ist derartig angeordnet, daß die Unterelektrode 10 auch in der Ausgangsstellung des Schlittens 6 dicht bzw. direkt unter der unteren der Keramikplatten 4 steht und beim Verschieben des Schlittens durch den Kolben des Druckmittelzylinders 24 in seine Arbeitsstellung nach rechts weiter unter die Keramikplatte 4 fährt, bis der Schlitten gegen die als Anschlag wirkende Stellschraube 5 stößt. Die Führungsbolzen 11 und das Gleitstück 12 sind so ausgebildet, daß die Frontfläche der Keramikplatten 16 die Elektrodenaufnahme 9 und die Unterelektrode 10 praktisch berühren und das Gleitstück 12 gegen die Kraft der Druckfeder 14 nach unten durchdrückbar ist. Der Schubstempel 18 weist an seinem freien Ende ein Gewinde auf, auf dem, mittels einer Kontermutter fixiert, einstellbar ein Druckstück 26 vorgesehen ist.

Die in der Figur nicht dargestellte Schweißstromquelle ist mit der Unterelektrode 10 sowie der Oberelektrode 23 verbunden.

Zur Durchführung einer Schweißung wird zunächst der Schlitten 6 in seine extreme linke Endstellung gefahren, bei der jedoch die Unterelektrode 10 die Keramikplatte 4 noch untergreift. Damit wird eine relativ große Öffnung der Werkzeuge geboten, welche das Einlegen der Adern einer oder mehrerer Litzen erleichtert. Zum Schweißvorgang selbst wird dann der Schlitten nach rechts in die dargestellte, durch die Stellschraube 5 gegebene Stellung gefahren, in der der Schweißraum auf die gewünschte Weite verringert ist. Im folgenden Arbeitsvorgang wird dann der Elektrodenhalter 20 in Pfeilrichtung 19 nach unten abgesenkt. Die Einstellung des Druckstückes 26 ist so vorgenommen, daß beim Auftreffen der Grundfläche der Oberelektrode 23 auf die obere Deckfläche der Keramikplatte 16 bzw. sehr kurz zuvor ein Flächenbereich des Elektrodenhalters 20 sich auf das Druckstück 26 legt, so daß beim weiteren Absenken des Elektrodenhalters das Gleitstück 12 über den Schubstempel 18 mitgenommen und mitsamt dem Backen 15 und der ihn umkleidenden Keramikplatte 16 in Pfeilrichtung 13 nach unten mitgenommen wird. Das bedeutet, daß die den Schweißraum nach rechts begrenzende Keramikplatte 4 ortsfest gehalten wurde. Die den Schweißraum nach unten begrenzende Stirnfläche der Unterelektrode 10 wurde während des Einstellens der Breite des Schweißraumes aus ihrer Ausgangslage nach rechts in die dargestellte Stellung verschoben. Die den Schweißraum nach links begrenzende Keramikplatte 16 des Backens 15 tangiert die linke Flanke der Unterelektrode 10 und ist mit dieser zur Einengung des Schweißraumes in die dargestellte Lage vorgerückt, so daß die Adern 27 nach dem Einlegen für den Schweißvorgang zusammengedrückt wurden. Nunmehr senkt sich für den eigentlichen Schweißvorgang aus der dargestellten Lage der Elektrodenhalter 20 mit der Oberelektrode 23 ab und nimmt beim Auflegen auf das Druckstück 26 nunmehr auch das Gleitstück 12 mit, wobei die rechte Flanke der Oberelektrode 23 entlang der dem Schweißraum zugewandten Flanke der Keramikplatte 4 gleitet, bis die Stirnfläche der Oberelektrode 23 auf den zusammengepreßten, miteinander zu verschweißenden Adern 27 der eingelegten Litze zur Auflage gelangt und der Schweißvorgang durch Aktivieren des Schweißstromkreises durchgeführt werden kann. Der der wirksamen Breite des Schweißraumes entsprechende Anteil der Frontfläche der Oberelektrode liegt hierbei direkt auf den Adern 27 auf, während die Restfläche beim Vorschub des Schlittens 6 von dem Backen 15 des Gleitstückes 12 mit dessen Keramikplatte 16 unterwandert wurde. Damit werden jeweils nur wählbare Bereiche der Frontflächen der Elektroden wirksam, und beim Absenken der Oberelektrode 23 senkt sich der Backen 15 mit seiner Keramikplatte 16 ebenfalls ab.

Die tatsächlich eingestellte Breite ergibt sich damit jeweils als jene Teile der Stirnflächen der Elektroden, welche nicht durch Teile der Keramikplatten 4 bzw. 16 abgedeckt sind, und beim Schließen gleitet einerseits eine Flanke der Oberelektrode 23 entlang der Flanke der Keramikplatte 4, während, praktisch mit der Oberelektrode 23 abgesenkt, der Backen 15 mit der Keramikplatte 16 entlang der links dargestellten Flanke der Elektrodenaufnahme 9 mit Unterelektrode 10 gleitet. Die Keramikplatten geben hier einerseits die zum Ausschließen von Nebenschlüssen erforderliche Isolation zwischen Oberelektrode und Unterelektrode, gleichzeitig bieten sie aber auch dicht anliegende oder mit geringstem Abstand einander gegenüberstehende Flächen mit, ihrer Härte entsprechend, geringstem Verschleiß.

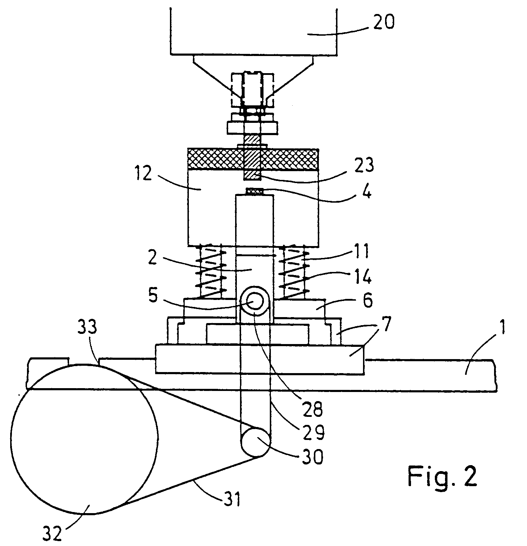

In Fig. 2 ist ein Seitenansicht einer der Fig. 1 entsprechenden Vorrichtung gezeigt, bei der die Stellschraube 5 mittels eines Ritzels 28 über einen Zahnriemen 29 angetrieben wird, der zu einem motorbetriebenen Doppelritzel 30 geführt ist, der über einen weiteren Zahnriemen 31 mit einer Anzeigescheibe 32 verbunden ist, die über ein Sichtfenster 33 der Grundplatte ablesbar ist.

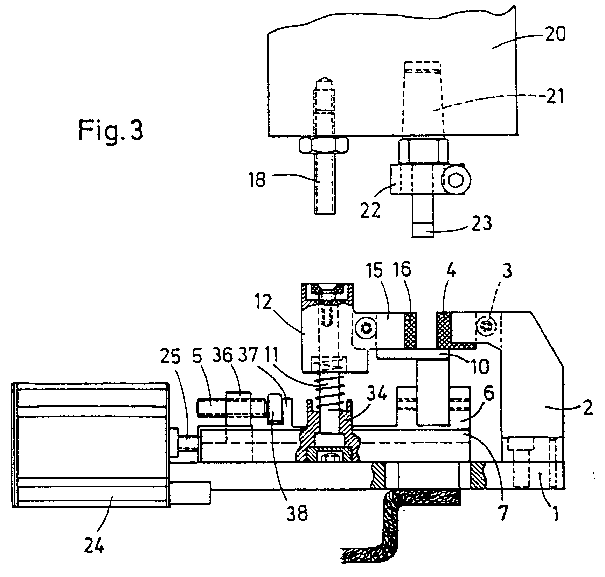

In Fig. 3 ist ein weiteres Ausführungsbeispiel dargestellt, bei dem die schon bekannten Referenznummern verwendet sind. Im Teilschnitt des Gleitstückes 12 läßt sich erkennen, daß hier die Führungsbolzen 11 mit dem Gleitstück verschraubt sind und in Führungshülsen 34 des Schlittens 6 gleiten, während der Schubstempel 18 im Elektrodenhalter 20 einstellbar angeordnet ist. Die Einstellschraube 35 ist hier in einem Gewinde eines Joches 36 des Schlittens 6 gehalten, dem ein ortsfester Anschlag 37 gegenübersteht. Zwischen beiden ist ein keilförmiger oder in seiner Stärke treppenförmig abgestufter Schieber 38 vorgesehen, welcher die Vorschubweite des Schlittens und damit die Weite des Schweißraumes bestimmt.

In allen diesen Fällen wird die gewünschte einfache, leichte und schnelle Einstellbarkeit der Weite des die Schweißstelle bestimmenden Raumes erreicht.

**Patentansprüche**

1.  Vorrichtung zum Verschweißen der Adern einer oder mehrerer, insbesondere aus Kupfer bestehenden Litzen zu einem festen und gasdichten Anschlußknoten mit einem Verdichtungsraum für eingelegte Litzenabschnitte, dessen Flanken gegeneinander verschiebbar sind, und dessen Deckfläche zur Durchführung einer Widerstandsverschweißung absenkbar ist,
    **dadurch gekennzeichnet,**
    daß die Flanken des Verdichtungsraumes als mit Keramikplatten (4, 16) überfangene Backen (3, 15) ausgeführt und seine horizontale Begrenzung durch die Stirnflächen von Elektroden (10, 23) gebildet sind,
    daß der Backen (3) ortsfest vorgesehen ist und der gegenüberliegende Backen (15) mit der Unterelektrode (10) gemeinsam auf einem Schlitten (6) vorgesehen sind, der innerhalb einer horizontalen Linearführung (7) gegen einen verstellbaren Anschlag (Stellschraube 5) vorschiebbar ist,
    wobei die Stirnfläche der Unterelektrode (10) die Unterkante der ortsfest gehaltenen Backen (3) untergreift und der gegenüberliegende Backen (15) entlang einer Vertikalführung (Führungsbolzen 11) entlang der ihm zugewandten Flanke der Unterelektrode (10) gegen die Kraft einer ihn vorspannenden Feder (14) herabdrückbar ist,
    und daß der zweite Backen (15) beim Absenken der ihn bereichsweise übergreifenden Oberelektrode (23) von dieser und/oder dem Elektrodenhalter (20) mitgenommen wird.

2.  Vorrichtung nach Anspruch 1,
    **dadurch gekennzeichnet,**
    daß der Schlitten (6) mit der Kolbenstange (25) eines Druckmittelzylinders (24) gekoppelt ist.

3.  Vorrichtung nach Anspruch 2,
    **gekennzeichnet durch**
    einen Druckluftzylinder (24)

4.  Vorrichtung nach einem der Ansprüche 1 bis 3,
    **dadurch gekennzeichnet,**
    daß der verstellbare Anschlag durch eine Stellschraube (5) gebildet ist.

5.  Vorrichtung nach einem der Ansprüche 1 bis 3,
    **dadurch gekennzeichnet,**
    daß der verstellbare Anschlag durch eine Nokkenscheibe gebildet ist.

6.  Vorrichtung nach einem der Ansprüche 1 bis 3,
    **dadurch gekennzeichnet,**
    daß der verstellbare Anschlag durch einen Schieber (38) mit stufenlos oder abgestuft sich ändernder Höhe gebildet ist.

7.  Vorrichtung nach einem der Ansprüche 1 bis 6,
    **dadurch gekennzeichnet,**
    daß dem verstellbaren Anschlag eine Antriebsvorrichtung (30) und/oder eine Anzeigevorrichtung (32, 33) zugeordnet sind.

8.  Vorrichtung nach einem der Ansprüche 1 bis 7,
    **dadurch gekennzeichnet,**
    daß die Keramikplatten (4, 16) außer den Flanken der Backen (3, 15) auch an diese anschließende Randbereiche der Backen abdecken.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-560 500 (STANDARD TELEPHONE AND CABLES LTD.) * Abbildungen 1,2 * --- | 1 | B23K11/11 H01R4/02 |
| A | CH-A-262 601 (STANDARD TELEPHON UND RADIO) *patentanspruch* * Abbildung 2 * --- | 1 | |
| A | FR-A-2 336 817 (ROSEMOUNT ENGINEERING CO LTD) * Abbildungen 1,2 * --- | 1 | |
| A | US-A-4 493 964 (SHIGEMASA) *zusammenfassung* * Abbildung 1 * ----- | 1 | |
| | | | **RECHERCHIERTE SACHGEBIETE (Int. Cl.5 )** |
| | | | B23K H01R |

Der vorliegende Recherchenbericht wurde für alle Patentansprüche erstellt

| Recherchenort | Abschlußdatum der Recherche | Prüfer |
|---|---|---|
| DEN HAAG | 13 OKTOBER 1992 | GAGLIARDI P. |